# EUROPÄISCHE PATENTSCHRIFT

(11) **EP 1 645 768 B1**
(45) Veröffentlichungstag und Bekanntmachung des Hinweises auf die Patenterteilung: **19.12.2007**
(21) Anmeldenummer: 04023664.8
(22) Anmeldetag: 05.10.2004
(51) Int. Cl.: F16D 65/12, C04B 35/80

(54) **Carbon-Keramik-Bremscheibe**
Carbon ceramic brake disc
Disque de frein en composite carbone/céramique

(43) Veröffentlichungstag der Anmeldung: 12.04.2006
(73) Patentinhaber: AUDI AG, 85045 Ingolstadt (DE)
(72) Erfinder: Reulein, Harald, 86750 Megesheim (DE); Winkelmann, Peter, 86672 Thierhaupten (DE); Zapf, Florian, 86368 Gersthofen (DE)
(74) Vertreter: Deckers, Hellmuth Alexander

(56) Entgegenhaltungen:
- US-A- 6 042 935
- US-A1- 2003 021 975
- US-B1- 6 267 209

## Beschreibung

Die Erfindung betrifft eine Carbon-Keramik-Bremsscheibe, die ohne Topf direkt an der Radwelle befestigt werden kann.

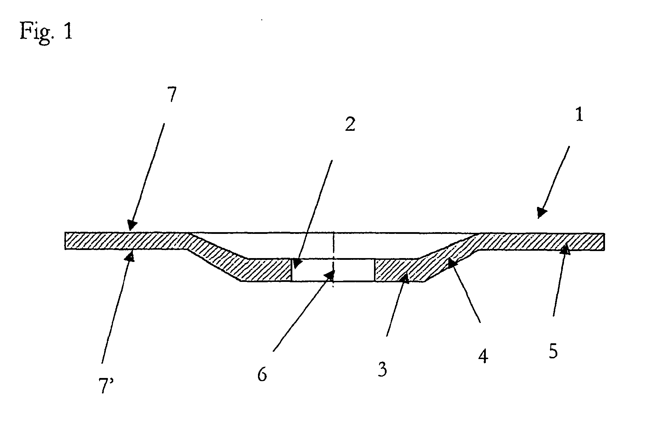

Carbon-Keramik-Bremsscheiben sind aus der Patentliteratur bekannt. So werden beispielsweise in der Patentanmeldung DE 44 38 456 A1 Reibeinheiten beschrieben, die die Form eines Zylinderrings aufweisen, wobei an dem inneren Umfang entlang Bohrungen angeordnet sind, mit denen die Reibscheibe an der Radwelle befestigt werden kann. Dabei ist das Verhältnis des inneren Durchmessers zum äußeren Durchmesser der Reibscheibe ca. 40 % (Zeichnung Fig. 1A).

Eine innenbelüftete Bremsscheibe aus einem Carbon-Keramik-Werkstoff ist auch aus der Anmeldung DE 195 43 799 A1 bekannt, die aus zwei parallelen Scheiben besteht, die durch Zapfen miteinander verbunden sind. Die beiden Scheiben haben ebenfalls die Form eines Zylinderrings, der innere Durchmesser beträgt gemäß der Zeichnung Fig. 2 ca. 33 % des äußeren Durchmessers.

Auch in der Patentschrift DE 197 21 647 werden Zylinderringscheiben aus Carbon-Keramik dargestellt, bei denen das Verhältnis des Innen- zum Außendurchmesser in Fig. 13 ca. 48 % beträgt.

Aus der gattungsgemäßen Patentschrift DE 197 19 634 C1 ist eine Bremseinheit bekannt, die eine keramische Bremsscheibe mit einem metallischen Topf umfaßt. Topf und Bremsscheibe sind durch Bolzen miteinander verbunden, wobei die Aufnahmen der Bolzen mit einer Hülse aus plastisch verformbarem Material ausgekleidet sind, oder die Bremsscheibe in dem Bereich der Bolzen selbst plastisch verformbar ist. Auf diese Weise sollen die Probleme ausgeräumt werden, die sich durch die unterschiedliche thermische Ausdehnung der verschiedenen Werkstoffe ergeben. Auch hier beträgt in Fig. 6a der Innendurchmesser der Bremsscheibe ca. 33 % des Außendurchmessers, und es werden unterschiedliche Materialien für Bremsscheibe und Topf eingesetzt. In der DE 197 19 634 C1 ist somit zwar das Problem der unterschiedlichen Materialien angesprochen, es wird jedoch durch eine spezielle Form der Befestigung gelöst.

Im Stand der Technik ist bisher nicht bekannt, das Problem der unterschiedlichen thermischen Ausdehnung zwischen Topf und Bremsscheibenring dadurch zu lösen, daß auf einen Topf ganz verzichtet wird. Ein metallischer Topf wurde insbesondere deshalb als unbedingt erforderlich angesehen, weil bei der Montage der aus Topf und Reibring zusammengesetzten Bremsscheibe an der Welle keine besondere Sorgfalt angewendet werden muß, da hier lediglich eine Verbindung zwischen zwei metallischen Werkstücken hergestellt wird. Umso kritischer war die Befestigung des Topfes an dem Reibring, mit dem zusätzlichen Problem der unterschiedlichen thermischen Ausdehnung. Weiter trägt der metallische Topf nicht nur den Reibring, sondern er wird auch zur Befestigung der Räder genutzt und muß daher zwei Ebenen aufweisen, die in Richtung der Drehachse gegeneinander versetzt sind. An der dem Rad abgewandten Seite wird üblicherweise der Reibring montiert (im Fall einer Carbon-Keramik-Bremsscheibe), oder sie bildet selbst den Reibring (im Fall einer Grauguß-Bremsscheibe). Der Versatz zwischen beiden Ebenen muß ausreichend bemessen sein, damit die Räder montiert werden können, und damit ein ausreichender Abstand zwischen den Rädern und der im Betrieb heiß werdenden Bremsscheibe gewahrt bleibt.

Alternativ zu der Lösung, einen einzigen Topf mit versetzten Ebenen zu verwenden, können zwei Flansche an der Welle angebracht werden, von denen der innere die Reibscheibe und der äußere das Rad trägt. Die zylinderringförmige Reibscheibe müßte jedoch dann zum Ein- und Ausbau einen Innendurchmesser aufweisen, der mindestens so groß ist wie der Außendurchmesser desjenigen Flanschs an der Welle, der dann das Rad trägt. Die Übertragung der Kräfte vom Rad zu der Reibscheibe und umgekehrt würde in diesem Fall über die Welle erfolgen, und würde diese einer erheblichen Torsionsbeanspruchung aussetzen, da die Kräfte umso größer werden, je näher man der Drehachse kommt. Daher ist dies keine technisch befriedigende Lösung.

Das Problem wurde gemäß der vorliegenden Erfindung dadurch gelöst, daß Reibring und Topf aus einem Stück aus einem keramischen Werkstoff ausgeführt werden.

Die Erfindung betrifft daher eine Carbon-Keramik-Bremsscheibe, die ohne Topf direkt an der Radwelle befestigt wird, wobei die Bremsscheibe aus mit Fasern aus Kohlenstoff verstärkter Keramik besteht und eine topfförmige Gestalt in der Nähe der Drehachse und eine ringscheibenförmige Gestalt in der Nähe der äußeren Peripherie aufweist. Dabei ist der innere Durchmesser allein durch die Abmessungen des Befestigungsflanschs an der Radwelle bestimmt. In der Nähe des inneren Durchmessers sind Befestigungsmittel vorgesehen, die mit entsprechenden Befestigungsmitteln an der Radwelle zusammenwirken und so eine Verbindung herstellen.

Vorteilhafterweise sind um die innere Peripherie mindestens 3 Bohrungen oder Ausnehmungen angeordnet, die gleichartigen Bohrungen oder Ausnehmungen wie z. B. Gewinden oder aufgesetzten Stiften an der Radwelle entsprechen. Bei der Montage der Bremsscheibe muß darauf geachtet werden, daß beim Befestigen die Befestigungsmittel einen ungefähr gleichgroßen Druck an jeder Befestigungsstelle auf den keramischen Werkstoff ausüben.

Bei dieser Art der Montage ergibt sich ein Vorteil gegenüber der herkömmlichen Ausführungsform mit einem metallischen Topf dadurch, daß die Kräfte über einen kürzeren Umfang und gleichmäßiger in den Reibring und damit auch in die verstärkende Struktur eingeleitet werden. Örtliche Spannungsspitzen sind daher gegenüber der herkömmlichen Konstruktion vermindert. Es hat sich in überraschender Weise gezeigt, daß dieser positive Effekt den möglichen Nachteil der wegen des kürzeren Hebelarms höheren Kräfte sogar mehr als kompensiert. Die geringere Zahl der hier erforderlichen Befestigungsmittel zur Bremsscheibe ist ein weiterer Vorteil.

Die Abmessungen der erfindungsgemäßen Bremsscheibe sind bevorzugt so, daß der innere Durchmesser ca. 60 mm bis ca. 100 mm beträgt, und daß der Scheibenkörper so aufgeteilt ist, daß die drehachsennahe innere Fläche senkrecht zur Drehachse eine Erstreckung hat in radialer Richtung beginnend von 10 % bis 25 % des Radius und endend bei 20 % bis 45 %; anschließend folgt ein gekröpfter Teil von 20 % bis 35 % beginnend, und endend bei 25 % bis 70 % des Radius. Hier schließt sich dann der Reibringteil an, der sich im Anschluß daran von 25 % bis 70 % des Radius bis zu 100 % des Radius erstreckt.

In der Zeichnung Fig. 1 ist ein Schnitt durch eine erfindungsgemäße Bremsscheibe gezeigt, in dem die im vorigen Absatz diskutierten Abmessungen illustriert sind.

Dabei ist in der Fig. 1 bei der Bremsscheibe **1** die innere Peripherie mit **2** bezeichnet, die den zur Drehachse **6** senkrechten flachen inneren Scheibenteil **3** begrenzt. Daran anschließend folgt der gekröpfte Teil **4,** der in den Reibring **5** übergeht. Die Erstreckung in radialer Richtung der Öffnung bis zur inneren Peripherie **2** ist 30 mm bis 50 mm von der Drehachse **6** aus gemessen, der innere flache Scheibenteil **3** erstreckt sich von 10 % bis zu 45 % des Radius, der gekröpfte Teil **4** von 20 % bis 70 % des Radius, und anschließend der Reibring **5,** dessen größere Flächen **7** und **7'** wiederum senkrecht zur Drehachse **6** stehen, von 25 % bis 70 % bis zu 100 % des Radius.

Der Vorteil der erfindungsgemäßen Konstruktion ist nicht nur die Vermeidung von Spannungen durch die bereits erläuterten unterschiedlichen thermischen Ausdehnungskoeffizienten, sondern zusätzlich auch die günstigeren Verhältnisse für die Krafteinleitung vom Reibringteil in den Topfteil.

Bevorzugt ist es, die erfindungsgemäßen Bremsscheiben aus einer mit Fasern aus Kohlenstoff verstärkten Keramik auszuführen, deren Matrix im wesentlichen aus Siliciumcarbid, Silicium und Kohlenstoff besteht.

Dabei ist es besonders bevorzugt, wenn in der topfförmigen Zone, also den Bereichen der Fläche **3** und des gekröpften Teils **4**, Fasern aus Kohlenstoff mit einer mittleren Länge von mehr als 30 mm, besonders bevorzugt mindestens 50 mm eingesetzt sind.

## Patentansprüche

1. Carbon-Keramik-Bremsscheibe (1), die ohne metallischen Topf direkt an der Radwelle befestigt werden kann, wobei die Bremsscheibe aus mit Fasern aus Kohlenstoff verstärkter Keramik besteht und eine topfförmige Gestalt in der Nähe der Drehachse (6) und eine ringscheibenförmige Gestalt in der Nähe der äußeren Peripherie aufweist.

2. Carbon-Keramik-Bremsscheibe (1) nach Anspruch 1, **dadurch gekennzeichnet, daß** um die innere Peripherie (2) mindestens 3 Bohrungen oder Ausnehmungen angeordnet sind, die gleichartigen Bohrungen oder Ausnehmungen oder aufgesetzten Stiften an der Radwelle entsprechen.

3. Carbon-Keramik-Bremsscheibe (1) nach Anspruch 1, **dadurch gekennzeichnet, daß** der innere Durchmesser 40 mm bis 100 mm beträgt, und daß der Scheibenkörper so aufgeteilt ist, daß der drehachsennahe innere flache Scheibenteil (3) senkrecht zur Drehachse (6) eine Erstreckung hat in radialer Richtung beginnend von 10 % bis 25 % und endend bei 20 % bis 45 %; anschließend folgt ein gekröpfter Teil (4) von 20 % bis 35 % beginnend, und endend bei 25 % bis 70 % des Radius, und danach der Reibringteil (5), der sich im Anschluß daran von 25 % bis 70 % des Radius bis zu 100 % des Radius erstreckt.

4. Carbon-Keramik-Bremsscheibe (1) nach Anspruch 1, **dadurch gekennzeichnet, daß** ihr Material eine mit Fasern aus Kohlenstoff verstärkte Keramik ist, deren Matrix im wesentlichen aus Siliciumcarbid, Silicium und Kohlenstoff besteht.

5. Carbon-Keramik-Bremsscheibe (1) nach Anspruch 1, **dadurch gekennzeichnet, daß** in der topfförmigen Zone umfassend die Bereiche der Fläche (3) und des gekröpften Teils (4), Fasern aus Kohlenstoff mit einer mittleren Länge von mehr als 30 mm eingesetzt sind.

## Claims

1. A carbon-ceramic brake disc (1) which can be secured directly to the wheel axle without a metal hub plate, the brake disc being made from ceramic reinforced with carbon fibres and having the shape of a hub plate in the vicinity of the axis of rotation (6) and the shape of an annular disc in the vicinity of the outer periphery.

2. A carbon-ceramic brake disc (1) according to Claim 1, **characterised in that** at least three bores or recesses are arranged around the inner periphery (2), corresponding to similar bores or recesses or mounted pins on the wheel axle.

3. A carbon-ceramic brake disc (1) according to Claim 1, **characterised in that** the internal diameter is 40 mm to 100 mm, and **in that** the disc body is divided up so that the inner flat disc part (3) close to the axis of rotation extends perpendicular to the axis of rotation (6) in the radial direction starting at 10% to 25% and ending at 20% to 45%; then there follows a cranked part (4) starting at 20% to 35% and ending at 25% to 70% of the way along the radius, and thereafter the friction ring part (5) extends, adjoining the latter, from 25% to 70% of the way along the radius to 100% of the way along the radius.

4. A carbon-ceramic brake disc (1) according to Claim 1, **characterised in that** its material is a ceramic reinforced with carbon fibres whereof the matrix substantially comprises silicon carbide, silicon and carbon.

5. A carbon-ceramic brake disc (1) according to Claim 1, **characterised in that** carbon fibres having an average length of more than 30 mm are used in the zone having the shape of a hub plate, comprising the regions of the face (3) and the cranked part (4).

## Revendications

1. Disque de frein en carbone-céramique (1), qui peut être fixé, sans pot métallique, directement à l'arbre de roue, lequel disque de frein est constitué d'une céramique renforcée avec des fibres de carbone et présente une configuration en forme de pot près de l'axe de rotation (6) et une configuration en forme de disque annulaire près de la périphérie externe.

2. Disque de frein en carbone-céramique (1) selon la revendication 1, **caractérisé en ce que** l'on ménage autour de la périphérie interne (2) au moins 3 perçages ou évidements, qui correspondent à des perçages ou évidements de même type ou à des broches rapportées sur l'arbre de roue.

3. Disque de frein en carbone-céramique (1) selon la revendication 1, **caractérisé en ce que** le diamètre intérieur est de 40 mm à 100 mm et **en ce que** le corps du disque est réparti de sorte que la partie de disque interne plate (3) à proximité de l'axe de rotation, perpendiculaire à l'axe de rotation (6), ait une extension dans la direction radiale partant de 10 % à 25 % et se terminant à une valeur de 20 % à 45 % ; qu'il y ait ensuite une partie coudée (4) partant de 20 % à 35 % et se terminant à une valeur de 25 % à 70 % du rayon et, ensuite, la partie de bague de friction (5), qui s'étend immédiatement à la suite de 25 % à 70 % du rayon à 100 % du rayon.

4. Disque de frein en carbone-céramique (1) selon la revendication 1, **caractérisé en ce que** son matériau est une céramique renforcée par des fibres de carbone, dont la matrice est sensiblement constituée de carbure de silicium, de silicium et de carbone.

5. Disque de frein en carbone-céramique (1) selon la revendication 1, **caractérisé en ce que**, dans la zone en forme de pot comprenant les zones de la surface (3) et de la partie coudée (4), on introduit des fibres de carbone d'une longueur moyenne supérieure à 30 mm.
